(19) Europäisches Patentamt
European Patent Office
Office européen des brevets

(11) EP 2 391 437 B1

(12) EUROPÄISCHE PATENTSCHRIFT

(45) Veröffentlichungstag und Bekanntmachung des Hinweises auf die Patenterteilung:
**28.08.2013 Patentblatt 2013/35**

(21) Anmeldenummer: **10703826.7**

(22) Anmeldetag: **27.01.2010**

(51) Int Cl.:
***B01D 53/14*** (2006.01) ***B01D 53/52*** (2006.01)
***B01D 53/62*** (2006.01)

(86) Internationale Anmeldenummer:
**PCT/EP2010/050943**

(87) Internationale Veröffentlichungsnummer:
**WO 2010/086334 (05.08.2010 Gazette 2010/31)**

# (54) Aminosäure und sauren Promotor enthaltendes Absorptionsmittel zum Entfernen saurer Gase

ABSORBENT COMPRISING AMINO ACID AND ACIDIC PROMOTER FOR ACID GAS REMOVAL

ABSORBENT COMPORTANT D'ACIDE AMINÉ ET UN PROMOTEUR ACIDIQUE POUR L'ENLÈVEMENT DES GAZ ACIDES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.01.2009 EP 09151655**

(43) Veröffentlichungstag der Anmeldung:
**07.12.2011 Patentblatt 2011/49**

(73) Patentinhaber: **BASF SE**
**67056 Ludwigshafen (DE)**

(72) Erfinder:
- **VORBERG, Gerald**
**67346 Speyer (DE)**
- **KATZ, Torsten**
**67434 Neustadt (DE)**
- **SIEDER, Georg**
**67098 Bad Dürkheim (DE)**
- **RIEMANN, Christian**
**67122 Altrip (DE)**
- **WAGNER, Rupert**
**67551 Worms (DE)**
- **LICHTFERS, Ute**
**76187 Karlsruhe (DE)**
- **DENGLER, Erika**
**67459 Böhl-Iggelheim (DE)**

(56) Entgegenhaltungen:
**EP-A1- 0 534 774**
**EP-A2- 0 671 200**
**WO-A1-2007/104800**
**WO-A1-2008/025743**
**US-A- 3 042 483**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 391 437 B1

## Beschreibung

Die vorliegende Erfindung betrifft ein Absorptionsmittel und ein Verfahren zum Entfernen saurer Gase aus einem Fluidstrom.

Die Entfernung von Sauergasen, wie z.B. $CO_2$, $H_2S$, $SO_2$, $CS_2$, HCN, COS oder Merkaptanen, aus Fluidströmen, wie Erdgas, Raffineriegas, Synthesegas, ist aus unterschiedlichen Gründen von Bedeutung. Der Gehalt an Schwefelverbindungen von Erdgas muss durch geeignete Aufbereitungsmaßnahmen unmittelbar an der Erdgasquelle reduziert werden, denn die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Die Verringerung des Gehalts an Kohlendioxid ist vielfach zur Einstellung eines vorgegebenen Brennwerts erforderlich.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Die Verwendung von Aminosäuresalzen in Absorptionsmitteln ist an sich bekannt. Die GB 1 543 748 beschreibt ein Verfahren zur Entfernung von $CO_2$ und $H_2S$ aus einem Crackgas unter Verwendung einer wässrigen Lösung eines Alkalimetallsalzes einer N-Dialkyl-$\alpha$-aminomonocarbonsäure, wie Dimethylglycin.

Die US-A 4,094,957 offenbart die Entfernung von $CO_2$ aus Gasströmen mit einer Absorptionslösung, die ein basisches Alkalimetallsalz, ein sterisch gehindertes Amin und eine Aminosäure wie N,N-Dimethylglycin, enthält.

EP-A 671 200 beschreibt die Entfernung von $CO_2$ aus Verbrennungsgasen bei Atmosphärendruck mit einer wässrigen Lösung eines Aminosäuremetallsalzes und Piperazin.

Die EP-A 134 948 offenbart ein alkalisches Absorptionsmittel, dessen Absorptionsleistung durch Zugabe einer Säure mit niedrigem $pK_a$-Wert verbessert wird.

Auch US3042483, EP0534774, EP0671200 und W02007/104800 beschreiben Verfahren zur Entfernung von Sauergasen, wobei u.a. Salze von Aminosäuren bzw. Promotoren verwendet werden.

Aminosäuresalze weisen eine hohe Absorptionsenergie für $H_2S$ und $CO_2$ auf; demzufolge ist auch die aufzuwendende Regenerationsenergie hoch. Absorptionsmittel auf der Basis von Aminosäuresalzen sind daher von Aminen wie Diethanolamin oder Methyldiethanolamin verdrängt worden, deren Regenerationsenergien niedriger sind.

Der Erfindung liegt die Aufgabe zugrunde, ein Verfahren und ein Absorptionsmittel zur Entfernung saurer Gase (Sauergase) aus Fluidströmen anzugeben, das gegenüber Absorptionsmitteln auf der Basis von Aminosäuresalzen einen verringerten Regenerationsenergiebedarf zeigt, ohne die Absorptionskapazität der Lösung für saure Gase wesentlich zu verringern.

Die Aufgabe wird gelöst durch ein Absorptionsmittel zum Entfernen saurer Gase aus einem Fluidstrom, das eine wässrige Lösung

a) wenigstens eines Metallsalzes einer Aminocarbonsäure, und

b) wenigstens eines sauren Promotors, der unter organischen Phosphonsäuren und Partialestern davon ausgewählt ist,

umfasst, wobei das molare Verhältnis von b) zu a) im Bereich von 0,0005 bis 1,0, vorzugsweise 0,01 bis 0,1, insbesondere 0,02 bis 0,09 liegt.

Lösungen von Aminocarbonsäuresalzen weisen vorteilhafte Eigenschaften als Absorptionsmittel auf: (i) Die Salze der Aminocarbonsäuren besitzen praktisch keinen Dampfdruck und sind daher im Gegensatz zu Aminen nicht flüchtig; (ii) die Kohlenwasserstoff-Coabsorption ist in Aminocarbonsäuresalz-Lösungen geringer als in AminLösungen; (iii) Aminocarbonsäuresalze sind beständiger gegen Zersetzung durch Sauerstoff; (iv) die Sauergaskapazität, insbesondere bei niedrigen Sauergas-partialdrücken ist höher als die der bekannten Amine.

In der nachstehenden Tabelle sind die Absorptionsenergien von Schwefelwasserstoff bzw. Kohlendioxid für verschiedene Amin bzw. Aminosäuresalze angegeben:

| Absorptionswärme | $H_2S$ (kJ/m$^3$) | $CO_2$ (kJ/m$^3$) |
|---|---|---|
| N,N-Dimethylglycin, Kaliumsalz (35%) | 1520 | 2474 |
| N-Methylalanin, Kaliumsalz (35%) | 1625 | 2985 |
| Monoethanolamin (15%) | 1500 | 1902 |

(fortgesetzt)

| Absorptionswärme | $H_2S$ (kJ/m$^3$) | $CO_2$ (kJ/m$^3$) |
|---|---|---|
| Diethanolamin (30%) | 1140 | 1510 |
| Diisopropanolamin (40%) | 1230 | 1750 |
| Methyldiethanolamin (50%) | 1045 | 1340 |

Aminosäuresalze weisen höhere Absorptionsenergien auf als übliche Amine. Bei der Regeneration des Absorptionsmittels muss Absorptionsenergie wieder aufgebracht werden, um die gebundenen Sauergase zu desorbieren. D. h. die aufzuwendende Regenerationsenergie der Aminosäuresalze ist höher als die der Amine. Bei einem gegebenen Energieeintrag im Desorber werden z. B. mit Methyldiethanolamin deutlich geringere Sauergas-Restbeladungen erreicht, was zu einer zu einer geringeren Sauergas-Restkonzentration des den Absorber verlassenden behandelten Fluids führt.
Es wurde nun gefunden, dass durch Zusatz eines sauren Promotors die aufzuwendende Regenerationsenergie für Aminocarbonsäuresalz-Lösungen deutlich verringert werden kann.
Aufgrund der stärkeren Basizität von Aminocarbonsäuresalz-Lösungen und des Vorliegens von Metallkationen können absorbierte Sauergase zu einer zweifach geladenen Spezies reagieren, wie nachstehend am Beispiel der $H_2S$-Absorption veranschaulicht ist (AA = Aminosäure; $M^+$ = Metallkation). Vermutlich beruht die Wirkung des sauren Promotors auf einer Verschiebung des Gleichgewichts der Gleichung (2) vom schwerer regenerierbaren Sulfid-Ion ($S^{2-}$) zum leichter regenerierbaren Hydrogensulfid-Ion ($HS^-$).

$$M^+ AA^- + H_2S \leftrightarrow M^+ HS^- + H^+ AA^- \qquad (1)$$

$$M^+ AA\text{-} + M^+ HS\text{-} \leftrightarrow 2\, M^+ S^{2-} + H^+ AA\text{-} \qquad (2)$$

Der saure Promotor ist geeigneterweise unter Protonensäuren (Brönstedt-Säuren) mit einem $pK_a$-Wert von weniger als 6, insbesondere weniger als 5, oder nicht-quatemären Ammoniumsalzen davon ausgewählt. Bei Säuren mit mehreren Dissoziationsstufen und demzufolge mehreren $pK_a$-Werten ist dieses Erfordernis erfüllt, wenn einer der $pK_a$-Werte im angegebenen Bereich liegt.
In bevorzugten Ausführungsformen umfasst der saure Promotor eine mehrbasische Säure.
Im Allgemeinen ist der saure Promotor ausgewählt unter organischen Phosphonsäuren und Partialestern davon.
Geeignete saure Promotoren sind beispielsweise organische Phosphonsäuren, beispielsweise Phosphonsäuren der Formel I

$$R\text{-}PO_3H \qquad (I)$$

worin R für $C_1$-$C_{18}$-Alkyl steht, das gegebenenfalls durch bis zu vier Substituenten substituiert ist, die unabhängig ausgewählt sind unter Carboxy, Carboxamido, Hydroxy und Amino.
Hierzu zählen Alkylphosphonsäuren, wie Methylphosphonsäure, Propylphosphonsäure, 2-Methyl-propylphosphonsäure, t-Butylphosphonsäure, n-Butylphosphonsäure, 2,3-Dimethylbutylphosphonsäure, Oktylphosphonsäure; Hydroxyalkylphosphonsäuren, wie Hydroxymethylphosphonsäure, 1-Hydroxyethylphosphonsäure, 2-Hydroxyethylphosphonsäure; Arylphosphonsäuren wie Phenylphosphonsäure, Toluylphosphonsäure, Xylylphosphonsäure, Aminoalkylphosphonsäuren wie Aminomethylphosphonsäure, 1-Aminoethylphosphonsäure, 1-Dimethylaminoethylphosphonsäure, 2-Aminoethylphosphonsäure, 2-(N-Methylamino)ethylphosphonsäure, 3-Aminopropylphosphonsäure, 2-Aminopropylphosphonsäure, 1-Aminopropylphosphonsäure, 1-Aminopropyl-2-chlorpropylphosphonsäure, 2-Aminobutylphosphonsäure, 3-Aminobutylphosphonsäure, 1-Aminobutylphosphonsäure, 4-Aminobutylphosphonsäure, 2-Aminopentylphosphonsäure, 5-Aminopentylphosphonsäure, 2-Aminohexylphosphonsäure, 5-Aminohexylphosphonsäure, 2-Aminooctylphosphonsäure, 1-Aminooctylphosphonsäure, 1-Amino-butylphosphonsäure; Amidoalkylphosphonsäuren wie 3-Hydroxymethylamino-3-oxopropylphosphonsäure; und Phosphonocarbonsäuren wie 2-Hydroxyphosphono-essigsäure und 2-Phosphonobutan-1,2,4-tricarbonsäure.
Phosphonsäuren der Formel II

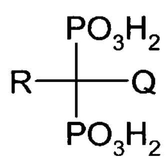

(II)

worin R für H oder $C_{1-6}$-Alkyl steht, Q für H, OH oder $NY_2$ steht und Y für H oder $CH_2PO_3H_2$ steht, wie 1-Hydroxyethan-1,1-diphosphonsäure;

Phosphonsäuren der Formel III

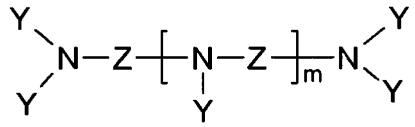

(III)

worin Z für$C_{2-6}$-Alkylen, Cycloalkandiyl, Phenylen, oder $C_{2-6}$-Alkylen, das durch Cyclo-alkandiyl oder Phenylen unterbrochen ist, steht, Y für $CH_2PO_3H_2$ steht und m für 0 bis 4 steht, wie Ethylendiamin-tetra(methylenphosphonsäure), Diethylentriamin-penta(methylenphosphonsäure) und Bis(hexamethylen)triamin-penta(methylen-phosphonsäure);

Phosphonsäuren der Formel IV

$$R\text{-}NY_2 \qquad (IV)$$

worin R für $C_{1-6}$-Alkyl, $C_{2-6}$-Hydroxyalkyl oder Y steht und Y für $CH_2PO_3H_2$ steht, wie Nitrilo-tris(methylenphosphonsäure) und 2-Hydroxyethyliminobis(methylenphosphonsäure).

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) und Nitrilo-tris(methylen-phosphonsäure), wovon 1-Hydroxyethan-1,1-diphosphonsäure besonders bevorzugt ist.

Der saure Promotor wird vorzugsweise in Form der freien Säure zu der Lösung des Aminocarbonsäuresalzes gegeben.

Alternativ kann der saure Promotor in Form eines nicht-quatemären Ammoniumsalzes eingesetzt werden, d. h. als Ammoniumsalz ($NH_4^+$-Salz) oder Salz eines primären, sekundären oder tertiären Ammoniumions. Unter den Bedingungen der Regeneration des Absorptionsmittels kann aus dem nicht-quaternären Ammoniumsalz die freie Säure freigesetzt werden. Geeignete Ammoniumsalze sind die protonierten Spezies von primären, sekundären oder tertiären Alkylaminen und/oder Alkanolaminen. Alkanolamine enthalten wenigstens ein Stickstoffatom, das durch wenigstens eine Hydroxyalkylgruppe, insbesondere eine $C_2$-$C_3$-Hydroxyalkylgruppe, meist eine 2-Hydroxyethyl- oder 3-Hydroxypropylgruppe, substituiert ist. Geeignete Alkanolamine sind z. B. ausgewählt unter Monoethanolamin (MEA), Diethanolamin (DEA), Diisopropanolamin, Triethanolamin (TEA), Diethylethanolamin (DEEA), Aminoethoxyethanol (AEE), Dimethylaminopropanol (DIMAP) und Methyldiethanolamin (MDEA), Methyldiisopropanolamin (MDIPA), Methyldiisopropanolamin (MDIPA), 2-Amino-2-methyl-1-propanol (AMP), 2-Amino-1-butanol (2-AB) oder Gemischen davon.

Die Aminocarbonsäure ist vorzugsweise unter $\alpha$-Aminosäuren, $\beta$-Aminosäuren, $\gamma$-Aminosäuren, $\delta$-Aminosäuren $\varepsilon$-Aminosäuren und $\zeta$-Aminosäuren ausgewählt.

Geeignete Aminocarbonsäuren sind beispielsweise

$\alpha$-Aminosäuren, wie Glycin (Aminoessigsäure), N-Methylglycin (N-Methylaminoessigsäure, Sarkosin), N,N-Dimethylglycin (Dimethylaminoessigsäure), N-Ethylglycin, N,N-Diethylclycin, Alanin (2-Aminopropionsäure), N-Methylalanin (2-(Methylamino)-propionsäure), N,N-Dimethylalanin, N-Ethylalanin, 2-Methylalanin (2-Amino-isobuttersäure), Leucin (2-Amino-4-methyl-pentan-1-säure), N-Methylleucin, N,N-Di-methylleucin, Isoleucin (1-Amino-2-methylpentansäure), N-Methylisoleucin, N,N-Di-methylisoleucin, Valin (2-Aminoisovaleriansäure), $\alpha$-Methylvalin (2-Amino-2-methylisovaleriansäure), N-Methylvalin (2-Methylaminoisovaleriansäure), N,N-Dimethylvalin, Prolin (Pyrrolidin-2-carbonsäure), N-Methylprolin, Serin (2-Amino-3-hydroxy-propan-1-säure), N-Methylserin, N,N-Dimethylserin, 2-(Methylamino)-isobuttersäure, Piperidin-2-carbonsäure, N-Methyl-piperidin-2-carbonsäure,

$\beta$-Aminosäuren, wie 3-Aminopropionsäure ($\beta$-Alanin), 3-Methylaminopropionsäure, 3-Dimethylaminopropionsäure, Iminodipropionsäure, N-Methyliminodipropionsäure, Piperidin-3-carbonsäure, N-Methyl-piperidin-3-carbonsäure,

$\gamma$-Aminosäuren, wie 4-Aminobuttersäure, 4-Methylaminobuttersäure, 4-Dimethyl-aminobuttersäure,

oder Aminocarbonsäuren wie Piperidin-4-carbonsäure, N-Methyl-piperidin-4-carbonsäure,.

Besonders eignen sich N-Mono-$C_1$-$C_4$-alkyl-aminocarbonsäuren und N,N-Di-$C_1$-$C_4$-alkyl-aminocarbonsäuren, insbesondere N-Mono-$C_1$-$C_4$-alkyl-$\alpha$-aminocarbonsäuren und N,N-Di-$C_1$-$C_4$-alkyl-$\alpha$-aminocarbonsäuren.

Das Metallsalz ist in der Regel ein Alkalimetall- oder Erdalkalimetallsalz, vorzugsweise ein Alkalimetallsalz, wie ein Natrium- oder Kaliumssalz, wovon Kaliumsalze am meisten bevorzugt sind.

Bevorzugte Metallsalze einer Aminocarbonsäure sind solche der allgemeinen Formel V

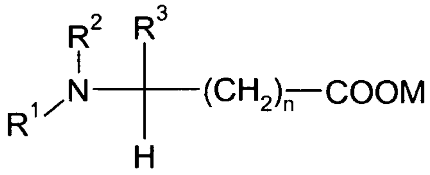 (V)

worin $R^1$, $R^2$ und $R^3$ unabhängig voneinander für H oder $C_1$-$C_3$-Alkyl stehen, M für Na oder K steht, und n für eine ganze Zahl von 0 bis 5 steht.

Besonders bevorzugte Metallsalze von Aminocarbonsäuren sind das Kaliumsalz von Dimethylglycin oder N-Methylalanin.

Im Allgemeinen enthält die wässrige Lösung 2 bis 5 kmol / $m^3$, insbesondere 3,5bis 4,5 kmol / $m^3$ Metallsalz der Aminocarbonsäure.

Das Absorptionsmittel kann auch Additive, wie Korrosionsinhibitoren, Enzyme etc. enthalten. Im Allgemeinen liegt die Menge an derartigen Additiven im Bereich von etwa 0,01-3 Gew.-% des Absorptionsmittels.

Die Erfindung betrifft außerdem ein Verfahren zum Entfernen saurer Gase aus einem Fluidstrom, bei dem man den Fluidstrom mit dem oben definierten Absorptionsmittel in Kontakt bringt.

In der Regel regeneriert man das beladene Absorptionsmittel durch

a) Erwärmung,
b) Entspannung,
c) Strippen mit einem inerten Fluid

oder eine Kombination zweier oder aller dieser Maßnahmen.

Das erfindungsgemäße Verfahren bzw. Absorptionsmittel ist geeignet zur Behandlung von Fluiden, insbesondere Gasströmen aller Art. Bei den sauren Gasen handelt es sich insbesondere um $CO_2$, $H_2S$, COS und Merkaptane. Außerdem können auch $SO_3$, $SO_2$, $CS_2$ und HCN entfernt werden. Fluide, welche die sauren Gase enthalten, sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren bzw. Absorptionsmittel ist besonders zur Behandlung von kohlenwasserstoffhaltigen Fluidströmen geeignet. Die enthaltenen Kohlenwasserstoffe sind z. B. aliphatische Kohlenwasserstoffe, wie $C_1$-$C_4$-Kohlenwasserstoffe, wie Methan, ungesättigte Kohlenwasserstoffe, wie Ethylen oder Propylen, oder aromatische Kohlenwasserstoffe wie Benzol, Toluol oder Xylol. Das erfindungsgemäße Verfahren bzw. Absorptionsmittel ist besonders zur Entfernung von $CO_2$ und $H_2S$ geeignet.

In bevorzugten Ausführungsformen ist der der Fluidstrom ein

(i) Wasserstoff enthaltender Fluidstrom oder Wasserstoff und Kohlendioxid enthaltender Fluidstrom; hierzu zählen Synthesegase, die z. B. durch Kohlevergasung oder Steamreforming herstellbar sind und gegebenenfalls einer Wassergas-Shift-Reaktion unterzogen sind; die Synthesegase werden z. B. zur Herstellung von Ammoniak, Methanol, Formaldehyd, Essigsäure, Harnstoff, zur Fischer-Tropsch-Synthese oder zur Energiegewinnung in einem Integrated Gasification Combined Cycle (IGCC) Prozess verwendet

(ii) Kohlenwasserstoffe enthaltender Fluidstrom; hiezu zählen neben Erdgas Abgase verschiedener Raffinerieprozesse, wie der Tailgas Unit (TGU), eines Visbreakers (VDU), eines katalytischen Crackers (LRCUU/FCC), eines Hydrocrackers (HCU), eines Hydrotreaters (HDS/HTU), eines Cokers (DCU), einer Atmosphärischen Destillation (CDU) oder eines Liquid Treaters (z. B. LPG).

Das erfindungsgemäße Verfahren eignet sich zur selektiven Entfernung von Schwefelwasserstoff gegenüber $CO_2$. Unter "selektiver Entfernung von Schwefelwasserstoff" wird verstanden, dass die folgende Ungleichung erfüllt ist

$$\frac{\dfrac{c(H_2S)_{feed} - c(H_2S)_{treat}}{c(H_2S)_{feed}}}{\dfrac{c(CO_2)_{feed} - c(CO_2)_{treat}}{c(CO_2)_{feed}}} > 1$$

worin $c(H_2S)_{feed}$ die Konzentration von $H_2S$ im Ausgangsfluid, $c(H_2S)_{treat}$ die Konzentration im behandelten Fluid, $c(CO_2)_{feed}$ die Konzentration von $CO_2$ im Ausgangsfluid und $c(CO_2)_{treat}$ die Konzentration von $CO_2$ im behandelten Fluid bedeuten.

Die selektive Entfernung von $H_2S$ s ist z. B. von Vorteil a) zur Einhaltung einer vorgegeben $H_2S$ Spezifikationen, wenn die maximale Sauergas-Gesamtbeladbarkeit des Absorptionsmittels bereits erreicht ist und b) zur Einstellung eines höheren $H_2S/CO_2$-Verhältnisses im Sauergasstrom, der bei der Regeneration des Absorptionsmittels freigesetzt wird und der typischerweise in eine Claus-Anlage gefahren wird. Ein Sauergasstrom mit höherem $H_2S/CO_2$-Verhältnis weist einen höheren Brennwert auf und unterdrückt die Bildung von COS (aus $CO_2$), welches die Laufzeit des Claus-Katalysators beeinträchtigt.

Im erfindungsgemäßen Verfahren wird das an sauren Gasbestandteilen reiche Ausgangsfluid (Rohgas) in einem Absorptionsschritt in einem Absorber in Kontakt mit dem Absorptionsmittel gebracht, wodurch die sauren Gasbestandteile zumindest teilweise ausgewaschen werden.

Als Absorber fungiert vorzugsweise eine in üblichen Gaswäscheverfahren eingesetzte Waschvorrichtung. Geeignete Waschvorrichtungen sind beispielsweise Füllkörper, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels beträgt im Absorptionsschritt im Allgemeinen etwa 30 bis 100 °C, bei Verwendung einer Kolonne beispielsweise 30 bis 70 °C am Kopf der Kolonne und 50 bis 100 °C am Boden der Kolonne. Der Gesamtdruck beträgt im Absorptionsschritt im Allgemeinen etwa 1 bis 120 bar, bevorzugt etwa 10 bis 100 bar.

Es wird ein an sauren Gasbestandteilen armes, d. h. ein an diesen Bestandteilen abgereichertes Produktgas (Reingas) und ein mit sauren Gasbestandteilen beladenes Absorptionsmittel erhalten. Das erfindungsgemäße Verfahren kann einen oder mehrere, insbesondere zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP-A 0 159 495, EP-A 0 20 190 434, EP-A 0 359 991 und WO 00100271.

Gemäß einer bevorzugten Ausführungsform wird das erfindungsgemäße Verfahren so durchgeführt, dass das die sauren Gase enthaltende Fluid zunächst in einem ersten Absorptionsschritt mit dem Absorptionsmittel bei einer Temperatur von 40 bis100 °C, bevorzugt 50 bis 90 °C und insbesondere 60 bis 90 °C behandelt wird. Das an sauren Gasen abgereicherte Fluid wird dann in einem zweiten Absorptionsschritt mit dem Absorptionsmittel bei einer Temperatur von 30 bis 90 °C, bevorzugt 40 bis 80 °C und insbesondere 50 bis 80 °C, behandelt. Dabei ist die Temperatur um 5 bis 20 °C niedriger als in der ersten Absorptionsstufe.

Aus dem mit den sauren Gasbestandteilen beladenen Absorptionsmittel können die sauren Gasbestandteile in üblicher Weise (analog zu den nachfolgend zitierten Publikationen) in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen beinhaltet der Regenerationsschritt mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537, 753 und US 4,553, 984.

Die Freisetzung der sauren Gasbestandteile im Regenerationsschritt kann beispielsweise in einer Entspannungskolonne, z.B. einem senkrecht oder waagerecht eingebauten Flash-Behälter oder einer Gegenstromkolonne mit

Einbauten, erfolgen.

Bei der Regenerationskolonne kann es sich ebenfalls um eine Füllkörper-, Packungs- oder Bodenkolonne handeln. Die Regenerationskolonne weist am Sumpf einen Aufheizer auf, z. B. einen Zwangsumlaufverdampfer mit Umwälzpumpe. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt.

Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537, 753, US 4,553, 984, EP-A 0 159 495, EP-A 0 202 600, EP-A 0 190 434 und EP-A 0 121 109.

Eine Verfahrensvariante mit zwei Niederdruckentspannungsstufen (1 bis 2 bar absolut), bei der die in der ersten Niederdruckentspannungsstufe teilregenerierte Absorptionsflüssigkeit erwärmt wird, und bei der gegebenenfalls vor der ersten Niederdruckentspannungsstufe eine Mitteldruckentspannungsstufe vorgesehen wird, bei der auf mindestens 3 bar entspannt wird, ist in DE 100 28 637 beschrieben. Dabei wird die beladene Absorptionsflüssigkeit zunächst in einer ersten Niederdruckentspannungsstufe auf einen Druck von 1 bis 2 bar (absolut) entspannt. Anschließend wird die teilregenerierte Absorptionsflüssigkeit in einem Wärmetauscher erwärmt und dann in einer zweiten Niederdruckentspannungsstufe erneut auf einen Druck von 1 bis 2 bar (absolut) entspannt.

Die letzte Entspannungsstufe kann auch unter Vakuum durchgeführt werden, das beispielsweise mittels eines Wasserdampfstrahlers, gegebenenfalls in Kombination mit einem mechanischen Vakuumerzeugungsapparat, erzeugt wird, wie beschrieben in EP-A 0 159 495, EP-A 0 202 600, EP-A 0 190 434 und EP-A 0 121 109(US 4, 551, 158).

Wegen der optimalen Abstimmung des Gehalts an den Aminkomponenten weist das erfindungsgemäße Absorptionsmittel eine hohe Beladbarkeit mit sauren Gasen auf, die auch leicht wieder desorbiert werden können. Dadurch können bei dem erfindungsgemäßen Verfahren der Energieverbrauch und der Lösungsmittelumlauf signifikant reduziert werden.

Die Erfindung wird anhand der beigefügten Zeichnung und des nachfolgenden Beispiels näher veranschaulicht.

Fig. 1 ist eine schematische Darstellung einer zur Durchführung des erfindungsgemäßen Verfahrens geeigneten Anlage.

Gemäß Fig. 1 wird über eine Zuleitung 1 ein geeignet vorbehandeltes, sauergase enthaltendes Gas in einem Absorber 2 mit dem regenerierten Absorptionsmittel, das über die Absorptionsmittelleitung 3 zugeführt wird, im Gegenstrom in Kontakt gebracht. Das Absorptionsmittel entfernt Sauergase durch Absorption aus dem Gas; dabei wird über eine Abgasleitung 4 ein an Sauergasen armes Reingas gewonnen.

Über eine Absorptionsmittelleitung 5, eine Pumpe 12, einen Solvent-Solvent-Wärmetauscher 11, in dem das mit Sauergas beladene Absorptionsmittel mit der Wärme des aus dem Sumpf der Desorptionskolonne 7 austretenden, regenerierten Absorptionsmittels aufgeheizt wird, und ein Drosselventil 6 wird das mit Sauergas beladene Absorptionsmittel einer Desorptionskolonne 7 zugeleitet. Im unteren Teil der Desorptionskolonne 7 wird das beladene Absorptionsmittel mittels eines (nicht dargestellten) Aufheizers erwärmt und regeneriert. Das dabei freigesetzte Sauergas verlässt die Desorptionskolonne 7 über die Abgasleitung 8. Das regenerierte Absorptionsmittel wird anschließend mittels einer Pumpe 9 über den Solvent-Solvent-Wärmetauscher 11, in dem das regenerierte Absorptionsmittel das mit Sauergas beladenen Absorptionsmittel aufheizt und selbst dabei abkühlt, und einen Wärmetauscher 10 der Absorptionskolonne 2 wieder zugeführt.

Beispiel

Man stellte eine 39 Gew.-%ige Lösung von N,N-Dimethylglycin, Kaliumsalz her. Aliquote von 200 ml wurden mit 1 Gew.-% Phosphorsäure ($H_2PO_4$) bzw. 2 Gew.-% 1-Hydroxyethan-1,1-diphosphonsäure (HEDP) versetzt. Ein weiteres Aliquot diente als Kontrolle.

Die drei Lösungen wurden bei 50 °C bei Normaldruck bis zum Gleichgewicht mit $H_2S$ beladen. Die $H_2S$-Gleichgewichtsbeladung wurde durch potentiometrische Titration gegen Silbernitrat bestimmt.

Anschließend wurden die Lösungen zur Simulation des Regenerationsvorgangs in einem Erlenmeyerkolben mit aufgesetztem Rückflußkühler in einem Ölbad bei konstant 100 °C aufgekocht. Dabei wurden jeweils 10 Nl/h Stickstoffgas durch die Flüssigkeit geperlt, um den Austausch zwischen Gas- und Flüssigphase zu verbessern und das freigesetzte $H_2S$ über den Kühler zu entfernen.

Nach bestimmten Zeitintervallen wurden jeweils Proben von 20 ml entnommen und der $H_2S$-Gehalt erneut durch potentiometrische Titration gegen Silbemitrat bestimmt. Die Ergebnisse sind in der nachstehenden Tabelle zusammengefasst.

| Beispiel | 1 (Vergleich) | 2 (Vergleich) | 3 |
|---|---|---|---|
| Promotor | Ohne | $H_3PO_4$ | HEDP |
| $H_2S$-Gleichgewichtsbeladung bei 50 °C $[Nm^3]_{H2S}/t$ | 54,41 | 50,83 | 57,17 |
| $H_2S$-Beladung bezogen auf Ausgangswert [%] nach | | | |
| 0 min | 100,0 | 100,0 | 100,0 |
| 15 min | 50,0 | 51,1 | 58,3 |
| 45 min | 33,7 | 32,5 | 27,1 |
| 105 min | 21,7 | 21,0 | 13,7 |
| 225 min | 14,5 | 10,9 | 3,6 |
| 405 min | 6,6 | 3,5 | 0,4 |

Aus den Versuchsergebnissen ist ersichtlich, dass eine Regeneration auf eine vorgegebene Restbeladung (z. B. weniger als 10 %) in den Beispielen 2 und 3 (mit saurem Promotor) schneller erzielt wird als im Vergleichsbeispiel 1. Da in der gewählten Versuchsanordnung der Energieeintrag dem Produkt des konstanten Wärmestroms und der Zeit proportional ist, ist die erforderliche Regenerationsenergie in den Beispielen 2 und 3 geringer.

## Patentansprüche

**1.** Absorptionsmittel zum Entfernen saurer Gase aus einem Fluidstrom, umfassend eine wässrige Lösung

a) wenigstens eines Metallsalzes einer Aminocarbonsäure, und
b) wenigstens eines sauren Promotors, der unter organischen Phosphonsäuren und Partialestern davon ausgewählt ist,

wobei das molare Verhältnis von b) zu a) im Bereich von 0,0005 bis 1,0 liegt.

**2.** Absorptionsmittel nach Anspruch 1, wobei der saure Promotor unter Protonensäuren mit einem $pK_a$-Wert von weniger als 6 oder nicht-quaternären Ammoniumsalzen davon ausgewählt ist.

**3.** Absorptionsmittel nach Anspruch 1 oder 2, wobei der saure Promotor eine mehrbasische Säure umfasst.

**4.** Absorptionsmittel nach einem der vorhergehenden Ansprüche, wobei der saure Promotor 1-Hydroxyethan-1,1-diphosphonsäure umfasst.

**5.** Absorptionsmittel nach einem der vorhergehenden Ansprüche, wobei die Aminocarbonsäure unter $\alpha$-Aminosäuren, $\beta$-Aminosäuren, $\gamma$-Aminosäuren, $\delta$-Aminosäuren, $\varepsilon$-Aminosäuren und $\zeta$-Aminosäuren ausgewählt ist.

**6.** Absorptionsmittel nach einem der vorhergehenden Ansprüche, wobei die Aminocarbonsäure eine N-Mono-$C_1$-$C_4$-alkyl-aminocarbonsäure oder eine N,N-Di-$C_1$-$C_4$-alkyl-aminocarbonsäure ist.

**7.** Absorptionsmittel nach einem der vorhergehenden Ansprüche, wobei das Metallsalz der Aminocarbonsäure das Kaliumsalz von Dimethylglycin oder N-Methylalanin ist.

**8.** Absorptionsmittel nach einem der vorhergehenden Ansprüche, wobei die wässrige Lösung 2 bis 5 kmol / $m^3$ Metallsalz der Aminocarbonsäure enthält.

**9.** Verfahren zum Entfernen saurer Gase aus einem Fluidstrom, bei dem man den Fluidstrom mit Absorptionsmittel nach einem der vorhergehenden Ansprüche in Kontakt bringt.

**10.** Verfahren nach Anspruch 9, zur selektiven Entfernung von Schwefelwasserstoff.

**11.** Verfahren nach Anspruch 9 oder 10, wobei der Fluidstrom Kohlenwasserstoffe enthält.

**12.** Verfahren nach einem der Ansprüche 9 bis 11, wobei man das beladene Absorptionsmittel durch

a) Erwärmung,
b) Entspannung,
c) Strippen mit einem inerten Fluid

oder eine Kombination zweier oder aller dieser Maßnahmen regeneriert.

**Claims**

**1.** An absorption medium for removing acid gases from a fluid stream which comprises an aqueous solution

a) of at least one metal salt of an aminocarboxylic acid, and
b) of at least one acid promoter which is selected from organic phosphonic acids and partial esters thereof,

wherein the molar ratio of b) to a) is in the range from 0.0005 to 1.0.

**2.** The absorption medium according to claim 1, wherein the acid promoter is selected from protonic acids having a $pK_a$ of less than 6 or non-quaternary ammonium salts thereof.

**3.** The absorption medium according to either claim 1 or 2, wherein the acid promoter comprises a multibasic acid.

**4.** The absorption medium according to any of the preceding claims, wherein the acid promoter comprises 1-hydroxyethane-1,1-diphosphonic acid.

**5.** The absorption medium according to any of the preceding claims, wherein the aminocarboxylic acid is selected from $\alpha$-amino acids, $\beta$-amino acids, $\gamma$-amino acids, $\delta$-amino acids, $\varepsilon$-amino acids and $\zeta$-amino acids.

**6.** The absorption medium according to any of the preceding claims, wherein the aminocarboxylic acid is an N-mono-$C_1$-$C_4$-alkylaminocarboxylic acid or an N,N-di-$C_1$-$C_4$-alkylaminocarboxylic acid.

**7.** The absorption medium according to any of the preceding claims, wherein the metal salt of the aminocarboxylic acid is the potassium salt of dimethylglycine or N-methylalanine.

**8.** The absorption medium according to any of the preceding claims, wherein the aqueous solution comprises 2 to 5 $kmol/m^3$ of metal salt of the aminocarboxylic acid.

**9.** A process for removing acid gases from a fluid stream, in which process the fluid stream is brought into contact with absorption medium according to any of the preceding claims.

**10.** The process according to claim 9 for selective removal of hydrogen sulfide.

**11.** The process according to either claim 9 or 10, wherein the fluid stream comprises hydrocarbons.

**12.** The process according to any of claims 9 to 11, wherein the loaded absorption medium is regenerated by

a) heating,
b) expansion,
c) stripping with an inert fluid

or by a combination of two or all of these measures.

## Revendications

1. Absorbant pour éliminer des gaz acides d'un flux de fluide, comprenant une solution aqueuse

   a) d'au moins un sel métallique d'un acide aminocarboxylique, et
   b) d'au moins un promoteur acide, qui est choisi parmi les acides phosphoniques organiques et leurs acides partiels,

   le rapport molaire de b) à a) se situant dans la plage de 0,0005 à 1,0.

2. Absorbant selon la revendication 1, le promoteur acide étant choisi parmi les acides protoniques présentant une valeur $pK_a$ inférieure à 6 ou les sels d'ammonium non quaternaire de ceux-ci.

3. Absorbant selon la revendication 1 ou 2, le promoteur acide comprenant un acide polybasique.

4. Absorbant selon l'une quelconque des revendications précédentes, le promoteur acide comprenant de l'acide 1-hydroxyéthane-1,1-diphosphonique.

5. Absorbant selon l'une quelconque des revendications précédentes, l'acide aminocarboxylique étant choisi parmi les $\alpha$-aminoacides, les ß-aminoacides, les $\gamma$-aminoacides, les $\delta$-aminoacides, les $\varepsilon$-aminoacides et les $\zeta$-aminoacides.

6. Absorbant selon l'une quelconque des revendications précédentes, l'acide aminocarboxylique étant un acide N-mono-$C_1$-$C_4$-alkylaminocarboxylique ou un acide N,N-di-$C_1$-$C_4$-alkylaminocarboxylique.

7. Absorbant selon l'une quelconque des revendications précédentes, le sel métallique de l'acide aminocarboxylique étant le sel de potassium de diméthylglycine ou de N-méthylalanine.

8. Absorbant selon l'une quelconque des revendications précédentes, la solution aqueuse contenant 2 à 5 kmoles/$m^3$ de sel métallique de l'acide aminocarboxylique.

9. Procédé pour éliminer des gaz acides d'un flux de fluide, dans lequel on met en contact le flux de fluide avec un absorbant selon l'une quelconque des revendications précédentes.

10. Procédé selon la revendication 9 pour l'élimination sélective de sulfure d'hydrogène.

11. Procédé selon la revendication 9 ou 10, le flux de fluide contenant des hydrocarbures.

12. Procédé selon l'une quelconque des revendications 9 à 11, dans lequel on régénère l'absorbant chargé par

    a) chauffage,
    b) détente,
    c) extraction avec un fluide inerte

    ou une combinaison de deux ou de toutes ces mesures.

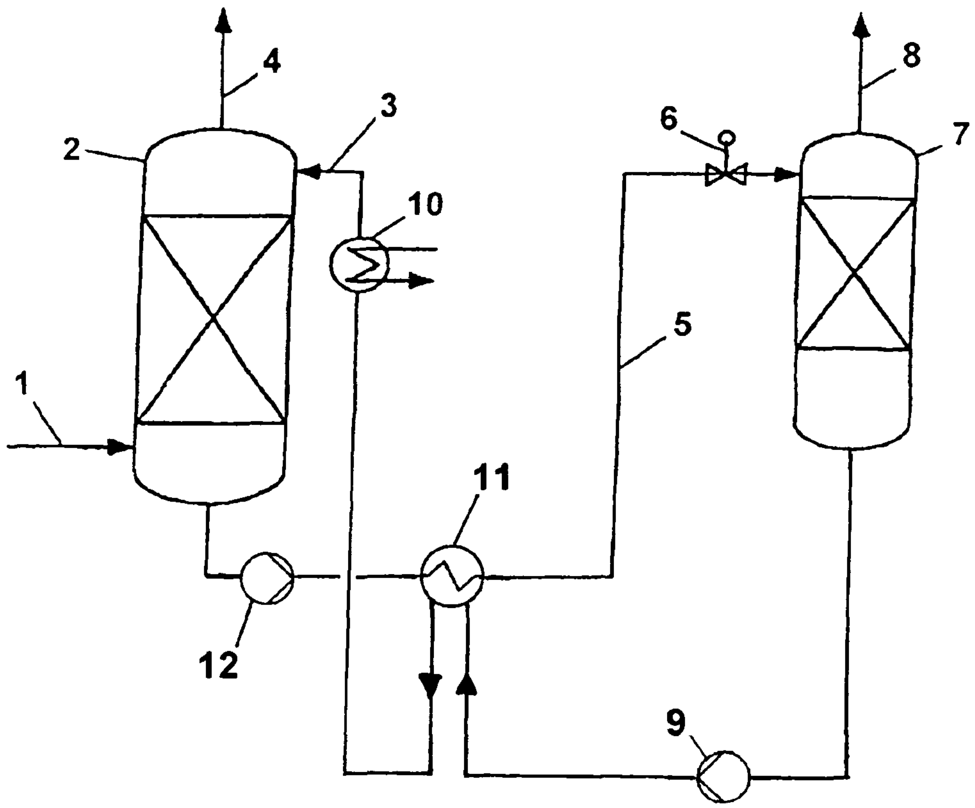


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 1543748 A
- US 4094957 A
- EP 671200 A
- EP 134948 A
- US 3042483 A
- EP 0534774 A
- EP 0671200 A
- WO 2007104800 A
- EP 0159495 A
- EP 020190434 A
- EP 0359991 A
- WO 00100271 A
- US 4537753 A
- US 4553984 A
- EP 0202600 A
- EP 0190434 A
- EP 0121109 A
- DE 10028637
- US 4551158 A